# EUROPEAN PATENT APPLICATION

(11) **EP 4 209 972 A1**
(43) Date of publication of application: **12.07.2023**
(21) Application number: 21863621.5
(22) Date of filing: 01.09.2021
(51) Int. Cl.: G06N 20/00

(54) **AI MODEL TRAINING METHOD AND APPARATUS, AND COMPUTING DEVICE AND STORAGE MEDIUM**

(30) Priority: 07.09.2020 CN 202010926721; 29.09.2020 CN 202011053283
(71) Applicant: Huawei Cloud Computing Technologies Co., Ltd., Guizhou 550025 (CN)
(72) Inventor: ZHU, Jiangcheng, Shenzhen, Guangdong 518129 (CN); HUANG, Zhesi, Shenzhen, Guangdong 518129 (CN); WU, Renke, Shenzhen, Guangdong 518129 (CN); BAI, Xiaolong, Shenzhen, Guangdong 518129 (CN); YANG, Bingbing, Shenzhen, Guangdong 518129 (CN); LI, Yi, Shenzhen, Guangdong 518129 (CN); ZHONG, Jinghua, Shenzhen, Guangdong 518129 (CN); DAI, Zonghong, Shenzhen, Guangdong 518129 (CN)
(74) Representative: Huawei European IPR
(86) International application number: PCT/CN2021/115881
(87) International publication number: WO 2022/048557

(57) **Abstract**

This application provides a method and an apparatus for training an AI model, a computing device, and a storage medium, and relates to the field of artificial intelligence technologies. The method is applied to an AI platform, the AI platform is associated with a computing resource pool, the computing resource pool includes a compute node used for model training, and the method includes: providing a training configuration interface for a user, where the training configuration interface includes a plurality of training modes for the user to select, and each training mode represents an allocation policy for compute nodes required for training an initial AI model; generating at least one training task based on a selection of the user on the training configuration interface; and performing the at least one training task to train the initial AI model, to obtain an AI model, where the obtained AI model is provided for the user to download or use. According to this application, distributed training can be performed more flexibly.

## Description

This application claims priority to Chinese Patent Application No. 202010926721.0, filed with the China National Intellectual Property Administration on September 7, 2020 and entitled "METHOD AND SYSTEM FOR ELASTIC TRAINING", and Chinese Patent Application No. 202011053283.8, filed with the China National Intellectual Property Administration on September 29, 2020 and entitled "METHOD AND APPARATUS FOR TRAINING AI MODEL, COMPUTING DEVICE, AND STORAGE MEDIUM", which are incorporated herein by reference in their entireties.

### TECHNICAL FIELD

This application relates to the field of artificial intelligence (artificial intelligence, AI) technologies, and in particular, to a method and an apparatus for training an AI model, a computing device, and a storage medium.

### BACKGROUND

With the development of artificial intelligence technologies, AI models represented by deep learning are widely used in various fields, such as image classification, target detection, and natural language processing. Training an initial AI model is a key process. Training is a process in which data of a training dataset is input to the initial AI model, the initial AI model performs calculation, and a parameter of the initial AI model is updated through a calculation result, to finally obtain an AI model with a specific capability (for example, an image classification capability, a target detection capability, and a natural language recognition capability).

Because a training process is complex and needs to consume a large quantity of computing resources, performing distributed training on an initial AI model by using a plurality of compute nodes becomes a manner that can effectively meet training efficiency. However, how to perform the distributed training more flexibly to balance a training requirement of a user and resource utilization is a problem that needs to be urgently resolved.

### SUMMARY

This application provides a method and an apparatus for training an AI model, a computing device, and a storage medium, to perform distributed training more flexibly.

According to a first aspect, this application provides a method for training an AI model. The method is applied to an AI platform, the AI platform is associated with a computing resource pool, the computing resource pool includes a compute node used for model training, and the method includes: providing a training configuration interface for a user, where the training configuration interface includes a plurality of training modes for the user to select, and each training mode represents an allocation policy for compute nodes required for training an initial AI model; generating at least one training task based on a selection of the user on the training configuration interface; and performing the at least one training task to train the initial AI model, to obtain an AI model, where the obtained AI model is provided for the user to download or use.

In the solution shown in this application, the AI platform provides a function of selecting a training mode for the user. The user may select a proper training mode to generate the at least one training task instead of by using conventional distributed training. Therefore, distributed training can be flexibly performed, and a training requirement of the user and resource utilization can be balanced.

In a possible implementation, the plurality of training modes include a first mode and/or a second mode, the first mode indicates that a quantity of training tasks is automatically adjusted in a process of training the initial AI model, and the second mode indicates that different training tasks share a resource of a same compute node. The plurality of training modes may further include a third mode, where the third mode represents a normal mode, and indicates that the distributed training is performed by using a preset or preselected compute node.

In the solution shown in this application, the first mode may also be referred to as a performance mode or a turbo mode, and the second mode may also be referred to as a sharing mode or an economic (economic) mode. The first mode indicates that a quantity of training tasks of one training job is automatically adjusted in the process of training the initial AI model, and the second mode indicates that different training tasks share a resource of a same compute node. Different training tasks herein may belong to a same training job, or may belong to different training jobs. In this way, when at least the first mode is used, a quantity of training tasks may be dynamically adjusted to accelerate a training speed. When at least the second mode is used, a training resource may be shared with another training job, thereby improving resource utilization.

In a possible implementation, the at least one training task runs in a container, and the method further includes: providing status information of the training process for the user in the process of training the initial AI model, where the status information includes at least one of the following information: a quantity of containers for performing the training task, resource usage of each container, a quantity of compute nodes for performing the training task, and resource usage of the compute node for performing the training task.

In the solution shown in this application, the at least one training task runs in the container, and each container includes a complete run-time environment including one training task, all dependencies required for performing the training task, and the like. In the process of training the initial AI model, the AI platform may further provide the status information of the training process for the user. In this way, the training process can be more intuitively presented to the user.

In a possible implementation, the plurality of training modes include the first mode and the second mode, and the generating at least one training task based on a selection of the user on the training configuration interface includes: generating the at least one training task based on the first mode and the second mode that are selected by the user on the training configuration interface.

In the solution shown in this application, the plurality of training modes include the first mode and the second mode, and the AI platform may generate the at least one training task based on the first mode and the second mode that are selected by the user on the training configuration interface. In this way, both the first mode and the second mode are used. Because the first mode can dynamically adjust the quantity of training tasks, the training speed is accelerated. In addition, because the second mode is used, a resource of a compute node may be shared with another training job, thereby improving resource utilization.

In a possible implementation, when the user selects the first mode on the training configuration interface, the training configuration interface is further provided for the user to input or select a quantity of containers that can run the training task; and the generating at least one training task based on a selection of the user on the training configuration interface includes: generating the at least one training task based on the training mode selected by the user on the training configuration interface and the quantity of containers that can run the training task and that is input or selected by the user.

In the solution shown in this application, when the user selects the first mode on the training configuration interface, the training configuration interface may be further provided for the user to input or select the quantity of containers that can run the training task. The user can input or select, on the training configuration interface, the quantity of containers that can run the training task. The AI platform may generate the at least one training task based on the training mode and the quantity of containers that are selected by the user on the training configuration interface. In this way, because the quantity of containers that can run the training task can be selected by the user, training is more intelligent.

In a possible implementation, when the user selects the second mode on the training configuration interface, the training configuration interface is further provided for the user to input or select resource usage of the container that runs the training task; and the generating at least one training task based on a selection of the user on the training configuration interface includes: generating the at least one training task based on the training mode selected by the user on the training configuration interface and the resource usage of the container that runs the training task and that is input or selected by the user.

In the solution shown in this application, when the user selects the second mode on the training configuration interface, the training configuration interface may be further provided for the user to input or select the resource usage of the container that runs the training task. The user can input or select, on the training configuration interface, the resource usage of the container that runs the training task. The AI platform may generate the at least one training task based on the training mode and the resource usage that are selected by the user on the training configuration interface. In this way, because the resource usage of the container that runs the training task can be selected by the user, training is more intelligent.

In a possible implementation, the resource usage of the container that runs the training task includes GPU resource usage less than usage of a single graphics processing unit (graphics processing unit, GPU) and/or video memory usage less than usage of a single video memory. In this way, because resource usage of a single container is small, resource utilization may be improved.

In a possible implementation, when the first mode is selected, the performing the at least one training task to train the initial AI model includes: obtaining, in a process of performing the at least one training task to train the initial AI model, an amount of idle computing resources in the computing resource pool when it is detected that an elastic scaling condition is met; adjusting, based on the amount of idle computing resources in the computing resource pool, a quantity of at least one training task and a quantity of containers used to run the training task; and running the adjusted quantity of training tasks in the adjusted quantity of containers to train the initial AI model.

In the solution shown in this application, when the first mode is selected, in a process in which the AI platform performs the at least one training task to train the initial AI model, the AI platform may detect whether the at least one training task meets the elastic scaling condition. When it is detected that the elastic scaling condition is met, the AI platform may obtain the amount of idle computing resources in the computing resource pool. Then, the AI platform adjusts, by using the idle amount, the quantity of at least one training task and the quantity of containers that run the training task. Then, the AI platform may run the adjusted quantity of training tasks in the adjusted quantity of containers to train the initial AI model. In this way, because elastic scaling can be performed, a training speed can be accelerated.

In a possible implementation, the adjusting a quantity of at least one training task and a quantity of containers used to run the training task, and running the adjusted quantity of training tasks in the adjusted quantity of containers to train the initial AI model includes: adding partial training tasks of the at least one training task to a target container that has run a training task of the at least one training task, running a plurality of training tasks in serial in the target container, and using, in a training process, an average value of model parameters obtained by running the plurality of training tasks in serial as an update value of a model parameter.

In the solution shown in this application, a quantity of containers is reduced during scaling-down. Partial training tasks of the at least one training task run on the scaled-down container, and the partial training tasks are added to the target container that has run the training task of the at least one training task. Because the training task runs in the target container and the partial training tasks are added to the target container, the target container runs a plurality of training tasks. The plurality of training tasks run in serial in the target container. The average value of the model parameters obtained by running the plurality of training tasks in serial is used as the update value of the model parameter. In this way, because the plurality of training tasks run in serial in the target container, it is equivalent to that the plurality of training tasks are performed in a distributed manner, which is the same as an original performance manner before scaling-down, and does not reduce training accuracy of the AI model.

In a possible implementation, when the second mode is selected, the method includes: determining, based on resource usage of a container that runs the at least one training task in the second mode, a remaining resource of a compute node corresponding to each container; and running one or more other training tasks by using the remaining resource of the compute node corresponding to each container.

In the solution shown in this application, when the second mode is selected, the AI platform may further subtract, based on the resource usage of the container that runs the at least one training task in the second mode, a used resource amount from a total resource amount of the compute node corresponding to each container, to obtain the remaining resource of the compute node corresponding to each container. The AI platform may run one or more other training tasks by using the remaining resource of the compute node corresponding to each container. In this way, the remaining resource of each compute node can be used, thereby improving resource utilization.

According to a second aspect, this application provides an apparatus for training an AI model. The apparatus is applied to an AI platform, the AI platform is associated with a computing resource pool, the computing resource pool includes a compute node used for model training, and the apparatus includes: a training configuration module, configured to provide a training configuration interface for a user, where the training configuration interface includes a plurality of training modes for the user to select, and each training mode represents an allocation policy for compute nodes required for training an initial AI model; a task management module, configured to: generate at least one training task based on a selection of the user on the training configuration interface; and perform the at least one training task to train the initial AI model, to obtain an AI model, where the obtained AI model is provided for the user to download or use. In this way, the AI platform provides a function of selecting a training mode for the user. The user may select a proper training mode to generate the at least one training task instead of by using conventional distributed training. Therefore, distributed training can be flexibly performed, and a training requirement of the user and resource utilization can be balanced.

In a possible implementation, the plurality of training modes include a first mode and/or a second mode, the first mode indicates that a quantity of training tasks is automatically adjusted in a process of training the initial AI model, and the second mode indicates that different training tasks share a resource of a same compute node.

In a possible implementation, the at least one training task runs in a container, and the apparatus further includes:
a display module, configured to provide status information of the training process for the user in the process of training the initial AI model, where the status information includes at least one of the following information: a quantity of containers for performing the training task, resource usage of each container, a quantity of compute nodes for performing the training task, and resource usage of the compute node for performing the training task.

In a possible implementation, the plurality of training modes include the first mode and the second mode, and the task management module is configured to:
generate the at least one training task based on the first mode and the second mode that are selected by the user on the training configuration interface.

In a possible implementation, when the user selects the first mode on the training configuration interface, the training configuration interface is further provided for the user to input or select a quantity of containers that can run the training task; and
the task management module is configured to:
generate the at least one training task based on the training mode selected by the user on the training configuration interface and the quantity of containers that can run the training task and that is input or selected by the user

In a possible implementation, when the user selects the second mode on the training configuration interface, the training configuration interface is further provided for the user to input or select resource usage of the container that runs the training task; and
the task management module is configured to:
generate the at least one training task based on the training mode selected by the user on the training configuration interface and the resource usage of the container that runs the training task and that is input or selected by the user.

In a possible implementation, the resource usage of the container that runs the training task includes GPU resource usage less than usage of a single graphics processing unit GPU and/or video memory usage less than usage of a single video memory.

In a possible implementation, when the first mode is selected, the task management module is configured to:
obtain, in a process of performing the at least one training task to train the initial AI model, an amount of idle computing resources in the computing resource pool when it is detected that an elastic scaling condition is met;
adjust, based on the amount of idle computing resources in the computing resource pool, a quantity of at least one training task and a quantity of containers used to run the training task; and
run the adjusted quantity of training tasks in the adjusted quantity of containers to train the initial AI model.

In a possible implementation, the task management module is configured to:
add partial training tasks of the at least one training task to a target container that has run a training task of the at least one training task, run a plurality of training tasks in serial in the target container, and use, in a training process, an average value of model parameters obtained by running the plurality of training tasks in serial as an update value of a model parameter.

In a possible implementation, when the second mode is selected, the task management module is further configured to:
determine, based on resource usage of a container that runs the at least one training task in the second mode, a remaining resource of a compute node corresponding to each container; and
run one or more other training tasks by using the remaining resource of the compute node corresponding to each container.

According to a third aspect, a computing device is provided. The computing device includes a processor and a memory, where the memory stores computer instructions, and the processor executes the computer instructions to implement the method in the first aspect and the possible implementations of the first aspect.

According to a fourth aspect, a computer-readable storage medium is provided. The computer-readable storage medium stores computer instructions. When the computer instructions in the computer-readable storage medium are executed by a computing device, the computing device is enabled to perform the method in the first aspect and the possible implementations of the first aspect, or the computing device is enabled to implement functions of the apparatus in the second aspect and the possible implementations of the second aspect.

According to a fifth aspect, a computer program product including instructions is provided. When the computer program product runs on a computing device, the computing device is enabled to perform the method in the first aspect and the possible implementations of the first aspect, or the computing device is enabled to implement functions of the apparatus in the second aspect and the possible implementations of the second aspect.

### BRIEF DESCRIPTION OF DRAWINGS

FIG. 1 is a schematic diagram of a structure of an AI platform 100 according to an example embodiment of this application;
FIG. 2 is a schematic diagram of an application scenario of an AI platform 100 according to an example embodiment of this application;
FIG. 3 is a schematic diagram of deployment of an AI platform 100 according to an example embodiment of this application;
FIG. 4 is a schematic diagram of a structure of a computing device 400 for deploying an AI platform 100 according to an example embodiment of this application;
FIG. 5 is a schematic flowchart of a method for training an AI model according to an example embodiment of this application;
FIG. 6 is a schematic diagram of status information of a training process according to an example embodiment of this application;
FIG. 7 is a schematic flowchart of a method for training an AI model according to an example embodiment of this application;
FIG. 8 is a schematic diagram of a training configuration interface according to an example embodiment of this application;
FIG. 9 is a schematic diagram of scaling-up according to an example embodiment of this application;
FIG. 10 is a schematic diagram of scaling-down according to an example embodiment of this application;
FIG. 11 is a schematic flowchart of a method for training an AI model according to an example embodiment of this application;
FIG. 12 is a schematic flowchart of a method for training an AI model according to an example embodiment of this application; and
FIG. 13 is a schematic diagram of a structure of a computing device according to an example embodiment of this application.

### DESCRIPTION OF EMBODIMENTS

To make objectives, technical solutions, and advantages of this application clearer, the following further describes implementations of this application in detail with reference to the accompanying drawings.

Currently, artificial intelligence is booming. Machine learning is a core means of implementing AI. Machine learning penetrates into various industries such as medicine, transportation, education, and finance. Not only professionals but also non-AI technology professions in various industries expect to complete specific tasks by using AI and machine learning.

For ease of understanding the technical solutions and embodiments provided in this application, the following describes in detail concepts such as an AI model, AI model training, distributed training, and an AI platform.

An AI model is a mathematical algorithm model that resolves a practical problem by using a machine learning idea. The AI model includes a large quantity of parameters and calculation formulas (or calculation rules). The parameters in the AI model are values that can be obtained by training the AI model by using a training dataset. For example, the parameters in the AI model are weights of the calculation formulas or calculation factors in the AI model. The AI model also includes some hyperparameters (hyper). The hyperparameter is a parameter that cannot be obtained by training the AI model by using the training dataset. The hyperparameter may be used to guide AI model construction or AI model training. There are various types of hyperparameters, such as a quantity of iterations (iterations) of AI model training, a learning rate (leaning rate), a batch size (batch size), a quantity of layers of the AI model, and a quantity of neurons at each layer In other words, a difference between the hyperparameter and the parameter of the AI model lies in that a value of the hyperparameter of the AI model cannot be obtained by analyzing the training dataset, and a value of the parameter of the AI model may be modified and determined by analyzing the training dataset in a training process.

There are various types of AI models. A widely used AI model is a neural network model. The neural network model is a mathematical algorithm model that simulates a structure and a function of a biological neural network (a central nervous system of an animal). A neural network model may include a plurality of neural network layers with different functions, where each layer includes a parameter and a calculation formula. Different layers in the neural network model have different names based on different calculation formulas or different functions. For example, a layer on which convolution calculation is performed is referred to as a convolution layer, and the convolution layer is usually used to perform feature extraction on an input signal (for example, an image). One neural network model may alternatively include a combination of a plurality of existing neural network models. Neural network models with different structures may be used in different scenarios (such as classification and recognition), or have different effects when used in a same scenario. Differences in neural network model structures specifically include one or more of the following: a difference in a quantity of network layers in a neural network model, a difference in a sequence of various network layers, and a difference in a weight, parameter, or calculation formula of each network layer. A plurality of different types of neural network models that have high accuracy and that are used for application scenarios such as recognition or classification already exist in the industry. Some of the neural network models, after being trained by using a specific training dataset, may be separately used to complete a task or complete a task in combination with another neural network model (or another function module).

A common AI model needs to be trained before being used to complete a task.

AI model training means using existing data and a specific method to make an AI model fit a law of the existing data and determine a parameter in the AI model. A training dataset needs to be prepared for training an AI model. Based on whether training data in the training dataset is labeled (that is, whether the data has corresponding specific label information, such as a type, a name, and a label box included in the data), AI model training may be classified into supervised training (supervised training) and unsupervised training (unsupervised training). When the supervised training is performed on the AI model, the training data that is used for training and that is in the training dataset includes a label (label). During AI model training, the training data in the training dataset is used as input of the AI model. The AI model calculates the input training data to obtain an output value of the AI model, uses a label corresponding to the training data as a reference of the output value of the AI model, calculates, by using a loss function (loss function), a loss (loss) value of the output value of the AI model corresponding to a label of the training data, and adjusts a parameter of the AI model based on the loss value. The AI model is iteratively trained by using each piece of training data in the training dataset, and the parameter of the AI model is continuously adjusted until the AI model can output, based on the input training data and with high accuracy, an output value that is the same as or similar to the label corresponding to the training data. If the unsupervised training is performed on the AI model, the training data that is used for training and that is in the dataset has no label, and the training data in the training dataset is sequentially input to the AI model. The AI model gradually recognizes an association and a potential rule between the training data in the training dataset until the AI model can be used to determine or recognize a type or a feature of the input data. Taking clustering as an example, after receiving a large quantity of training data, an AI model used for clustering may learn a feature of each piece of training data and an association and a difference between the training data, and automatically classify the training data into a plurality of types. Different AI models may be used for different task types. Some AI models can be trained only in a supervised learning manner. Some AI models can be trained only in an unsupervised learning manner. Some AI models can be trained in the supervised learning manner, and can also be trained in the unsupervised learning manner. A completely trained AI model can be used to complete a specific task. Generally, all AI models in machine learning need to be trained in the supervised learning manner. Training the AI model in the supervised learning manner can enable the AI model to more pertinently learn, in a training dataset with a label, an association between training data and a corresponding label in the training dataset, so that accuracy is high when the trained AI model is used to predict other input inference data.

A loss function is a function used to measure an extent to which an AI model is trained (that is, used to calculate a difference between a prediction result of the AI model and an actual target). In a process of training an AI model, because it is expected that output of the AI model is as close as possible to a value that is actually desired to be predicted, a predicted value obtained by a current AI model based on input data may be compared with an actually desired target value (namely, a label of the input data), and then, a parameter in the AI model is updated based on a status of a difference between the predicted value and the target value (certainly, before the first update, there is usually an initialization process, that is, an initial value is pre-configured for the parameter in the AI model). During each time of training, a difference between a value predicted by the current AI model and an actual target value is determined by using a loss function, to update the parameter of the AI model. When the AI model can predict the actually desired target value or a value that is quite close to the actually desired target value, it is considered that training of the AI model is completed.

Distributed training is one of the common acceleration methods in a process of training an AI model. Distributed training means splitting and distributing training to a plurality of independent compute nodes for independent computing, and periodically summarizing and redistributing results to accelerate a process of training an AI model. Currently, mainstream distributed computing topologies include ps-worker and all-reduce. The distributed training may include data-parallel distributed training and model-parallel distributed training.

In the data-parallel distributed training, training data in a training dataset is distributed to a plurality of compute nodes for computing at the same time. AI model training is performed on each compute node, and model parameters are updated after aggregation of gradients of model parameters generated on the compute nodes. Specifically, there are two options for splitting and distributing the training dataset to K compute nodes: 1. A batch size on each of the K compute nodes is the same as a batch size when a single compute node is used for computing, where the batch size refers to an amount of training data selected from the training dataset before each time of parameter adjustment. 2. A batch size on each compute node is obtained by dividing, by K, a batch size when a single compute node is used for computing, so that a global batch size after aggregation remains unchanged. In subsequent descriptions of embodiments of this application, a method for training an AI model is described by using data-parallel distributed training as an example.

In model-parallel distributed training, a model is split and distributed to a plurality of compute nodes, and data does not need to be split. For a large-scale deep learning or machine learning model, memory or video memory consumption is large, and therefore, the model can be split. There are also various splitting manners for model-parallel distributed training. For example, for a neural network model, such a hierarchical model may be divided based on layers, that is, each layer or a plurality of layers are placed on one compute node.

An AI platform is a platform provides a convenient AI development environment and a convenient development tool for an AI developer and a user. The AI platform is equipped with various pre-trained AI models or AI sub-models for resolving different problems. The AI platform can search for and build an applicable AI model based on a user requirement. A user only needs to determine a requirement of the user on the AI platform, prepare a training dataset based on a prompt, and upload the training dataset to the AI platform. Then, the AI platform can train, for the user, an AI model that can be used to implement a user requirement. Alternatively, the user prepares an algorithm (also referred to as an initial AI model) and a training dataset of the user based on a prompt, and uploads the algorithm and the training dataset to the AI platform. The AI platform can train, based on the algorithm and the training dataset of the user, an AI model that can be used to implement a user requirement. The user can use a trained AI model to complete a specific task of the user. It should be understood that, in this application, an AI model (for example, an algorithm uploaded by a user, an algorithm preset by an AI platform, or a pre-trained model) before training by the AI platform is referred to as an initial AI model.

To perform distributed training more flexibly and balance a training requirement of a user and resource utilization, an embodiment of this application provides an AI platform. A plurality of training modes are introduced into the AI platform, and each training mode is used to represent an allocation policy for compute nodes required by an initial AI model.

It should be noted that the AI model mentioned above is a general term, and the AI model includes a deep learning model, a machine learning model, and the like.

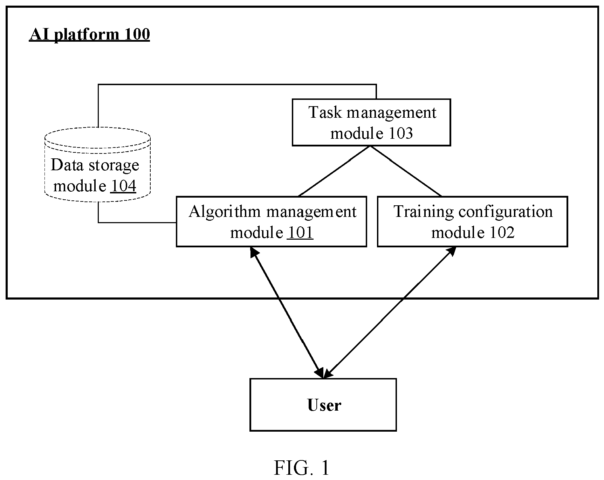

FIG. 1 is a schematic diagram of a structure of an AI platform 100 according to an embodiment of this application. It should be understood that FIG. 1 is merely an example of a schematic diagram of a structure of the AI platform 100. Module division of the AI platform 100 is not limited in this application. As shown in FIG. 1, the AI platform 100 includes an algorithm management module 101, a training configuration module 102, a task management module 103, and a data storage module 104. The AI platform is associated with a computing resource pool. The computing resource pool includes a plurality of compute nodes used for model training. The AI platform may schedule the compute nodes in the computing resource pool for model training.

The following briefly describes functions of the modules in the AI platform 100.

The algorithm management module 101 provides an initial AI model management interface used for a user to upload an initial AI model created based on a training target of the user; or for the user to obtain an existing initial AI model from an initial AI model base. Alternatively, the algorithm management module 101 may be further configured to obtain, based on a task target input by the user, an initial AI model preset on the AI platform. The initial AI model created by the user based on the training target may be compiled based on a framework provided by the AI platform. The initial AI model may include an AI model that is not trained and an AI model that is trained but not completely trained. The AI model that is not trained means that a built AI model is not trained by using a training dataset, and parameters in the built AI model are all preset values.

The training configuration module 102 provides a training configuration interface for the user. The user may select a training mode on the training configuration interface, and the training mode may include a normal mode, a first mode, and a second mode. The first mode may also be referred to as a turbo mode or a performance mode, and the second mode may also be referred to as an economic mode or a sharing mode. In the following descriptions, the first mode is referred to as the performance mode, and the second mode is referred to as the sharing mode. The normal mode is an existing mode of distributed training.

The performance mode means that resources used by an initial AI model are dynamically adjusted in a process of training an AI model.

The sharing mode means that in the process of training the AI model, training of different AI models may share a resource of a same compute node, or different training tasks of a same AI model share a resource of a same compute node.

The normal mode means that in the process of training the AI model, training of each AI model occupies all resources of one or more compute nodes, and a quantity of resources is not dynamically adjusted.

Optionally, when the user selects the sharing mode as the training mode, the user may further select, on the training configuration interface, resource usage of a container that runs a training task.

Optionally, when the user selects the performance mode as the training mode, the user may further select, on the training configuration interface, a quantity of containers that can run a training task.

Optionally, the user may further select an initial AI model and configure an input and output object storage service (object storage service, OBS) path on the training configuration interface.

Optionally, the user may further select, on the training configuration interface, a specification of a compute node used for training the initial AI model, for example, a size of a graphics processing unit (graphics processing unit, GPU) and an amount of a video memory of the compute node used for training the initial AI model.

Optionally, the user may further input, on the training configuration interface, a training dataset used for training the initial AI model. Data in the training dataset may be labeled data or may be unlabeled data. Specifically, an access address of the training dataset may be input.

Optionally, the user may further input, on the training configuration interface, an expected effect on an AI model that completes a task target and an expected training completion time, for example, input or select that accuracy of an AI model used for facial recognition is higher than 99%, and training is expected to be completed within 24 hours.

The training configuration module 102 may communicate with the algorithm management module 101, and is configured to obtain an access address of the initial AI model from the algorithm management module 101. The training configuration module 102 is further configured to package a training job based on the access address of the initial AI model and some content input or selected by the user on the training configuration interface.

The configuration module 102 may further communicate with the task management module 103, and submit the training job (training job) to the task management module 103.

The task management module 103 is a core module for managing the process of training the AI model. The task management module 103 may communicate with the algorithm management module 101, the training configuration module 102, and the data storage module 104. The processing is as follows:
the task management module 103 pulls, based on information such as a training mode, a quantity of containers, resource usage of a container, and an access address of an initial AI model in the training job provided by the training configuration module 102, a corresponding training image and the initial AI model, to generate a container that runs at least one training task. The container for the at least one training task is delivered onto a compute node of a computing resource pool for running.

Optionally, the task management module 103 is further configured to: monitor whether the at least one training task meets a scaling condition, and when the scaling condition is met, dynamically adjust the at least one training task and the container for the at least one training task.

Optionally, the task management module 103 is further configured to configure a shared resource of each container. For example, a container 1 and a container 2 are scheduled onto a compute node of a computing resource pool.

The data storage module 104 (for example, may be a data storage resource corresponding to an OBS provided by a cloud service provider) is configured to store a training dataset uploaded by a user, an initial AI model uploaded by a user, an initial AI model uploaded by another user, some configuration items of a training mode, and the like.

Optionally, the AI platform further includes a display module 105 (not shown in FIG. 1). The display module 105 communicates with the task management module 103 to obtain status information of a training process, a trained AI model, and the like, and provides the status information and the AI model for the user.

It should be noted that the AI platform in this application may be a system that can interact with a user. The system may be a software system, a hardware system, or a system combining software and hardware. This is not limited in this application.

The AI platform provided in this embodiment of this application may provide, through the functions of the foregoing modules, a service for flexible distributed training for a user, so that the AI platform can balance a training requirement of the user and resource utilization.

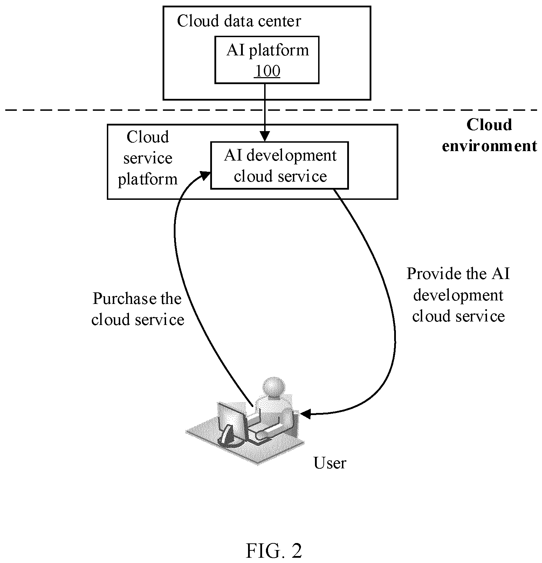

FIG. 2 is a schematic diagram of an application scenario of an AI platform 100 according to an embodiment of this application. As shown in FIG. 2, in this embodiment, the AI platform 100 may be completely deployed in a cloud environment. The cloud environment is an entity that uses basic resources to provide cloud services for users in a cloud computing mode. The cloud environment includes a cloud data center and a cloud service platform. The cloud data center includes a large quantity of basic resources (including a computing resource pool, a storage resource, and a network resource) owned by a cloud service provider. The computing resource pool included in the cloud data center may be a large quantity of compute nodes (for example, servers). The AI platform 100 may be independently deployed on a server or a virtual machine of the cloud data center. Alternatively, the AI platform 100 may be deployed on a plurality of servers of the cloud data center in a distributed manner, or deployed on a plurality of virtual machines of the cloud data center in a distributed manner, or deployed on a server and a virtual machine of the cloud data center in a distributed manner. As shown in FIG. 2, the AI platform 100 is abstracted by the cloud service provider into an AI cloud service on the cloud service platform to provide for the user. After the user purchases the cloud service on the cloud service platform (where the user may pre-charge and then perform settlement based on final resource usage), the cloud environment provides the AI platform cloud service for the user by using the AI platform 100 deployed in the cloud data center. When using the AI platform cloud service, the user may determine, through an application programming interface (application programming interface, API) or a graphical user interface (graphical user interface, GUI), a task to be completed by an AI model, upload a training dataset to the cloud environment, and the like. The AI platform 100 in the cloud environment receives task information of the user and the training dataset, and performs data preprocessing and AI model training. The AI platform returns, to the user through the API or the GUI, content such as status information of a process of training the AI model. The user may download or online use the trained AI model to complete a specific task.

In another embodiment of this application, when the AI platform in the cloud environment is abstracted into the AI cloud service to provide for the user, when the user selects a sharing mode, the user may purchase a use duration of a container with fixed resource usage. When the resource usage is fixed, a longer use duration indicates a higher fee, and vice versa. The AI platform trains an AI model within the use duration. Alternatively, when the user selects the sharing mode, the user may pre-recharge, and after the training is completed, performs settlement based on a quantity of finally used GPUs and a use duration.

When the user selects a performance mode, the user may pre-recharge, and after the training is completed, performs settlement based on the quantity of finally used GPUs and the use duration.

In another embodiment of this application, when the AI platform 100 in the cloud environment is abstracted into the AI cloud service to provide for the user, the AI cloud service may be divided into two parts: a basic AI cloud service and an AI elastic training cloud service. The user can first purchase only the basic AI cloud service on the cloud service platform and then purchase the AI elastic training cloud service when the user needs to use the service. After the purchase, the cloud service provider provides an API of the AI elastic training cloud service. Finally, the AI elastic training cloud service is additionally charged based on a quantity of times of API calls.

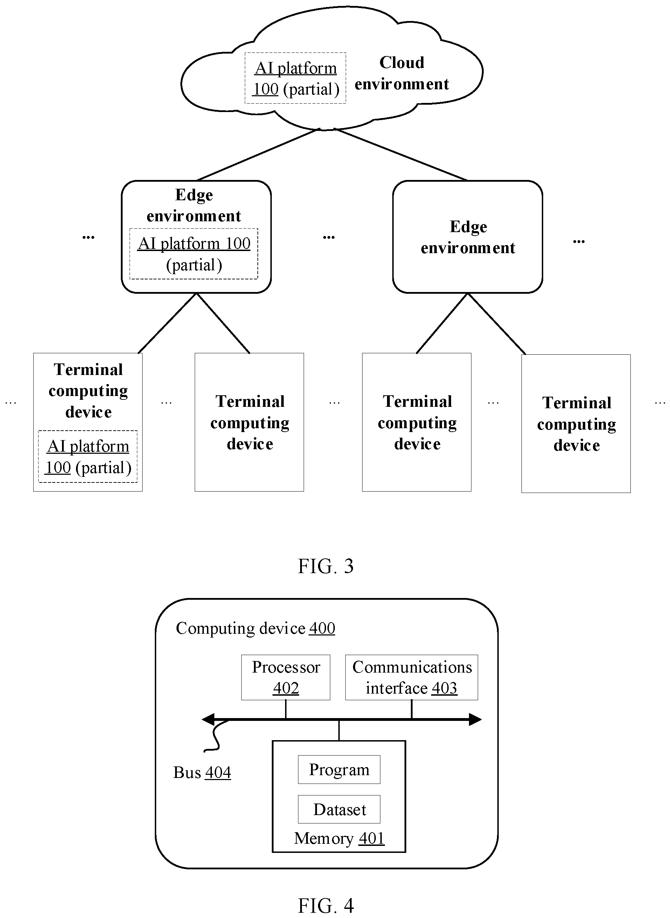

Deployment of the AI platform 100 provided in this application is flexible. As shown in FIG. 3, in another embodiment, the AI platform 100 provided in this application may be alternatively deployed in different environments in a distributed manner. The AI platform 100 provided in this application may be logically divided into a plurality of parts, and each part has a different function. For example, in this embodiment, the AI platform 100 includes an algorithm management module 101, a training configuration module 102, a task management module 103, and a data storage module 104. The parts of the AI platform 100 may be separately deployed in any two or three environments of a terminal computing device, an edge environment, and a cloud environment. The terminal computing device includes a terminal server, a smartphone, a notebook computer, a tablet computer, a personal desktop computer, an intelligent camera, and the like. The edge environment is an environment that includes a set of edge computing devices that are close to the terminal computing device, and the edge computing device includes: an edge server, an edge station with computing power, and the like. The parts of the AI platform 100 deployed in different environments or devices cooperate to provide a user with functions such as training an AI model. For example, in a scenario, the algorithm management module 101, the training configuration module 102, and the data storage module 104 in the AI platform 100 are deployed in the terminal computing device, and the task management module 103 in the AI platform 100 is deployed in the edge computing device in the edge environment. The user sends an initial AI model to the algorithm management module 101 in the terminal computing device, and the terminal computing device stores the initial AI model in the data storage module 104. The user selects a training mode by using the training configuration module 102. The task management module 103 in the edge computing device generates at least one training task, and performs the at least one training task. It should be understood that, in this application, that a part of the AI platform 100 is specifically deployed in an environment is not limited. In actual application, adaptive deployment may be performed based on a computing capability of the terminal computing device, resource occupation statuses of the edge environment and the cloud environment, or a specific application requirement.

The AI platform 100 may be alternatively independently deployed on a computing device in any environment (for example, independently deployed on an edge server in an edge environment). FIG. 4 is a schematic diagram of a hardware structure of a computing device 400 on which an AI platform 100 is deployed. The computing device 400 shown in FIG. 4 includes a memory 401, a processor 402, a communications interface 403, and a bus 404. The memory 401, the processor 402, and the communications interface 403 are connected to and communicate with each other through the bus 404.

The memory 401 may be a read-only memory (read-only memory, ROM), a random access memory (random access memory, RAM), a hard disk, a flash memory, or any combination thereof. The memory 401 may store a program. When the program stored in the memory 401 is executed by the processor 402, the processor 402 and the communications interface 403 are configured to execute the AI platform 100 to train an AI model for a user The memory may further store a training dataset. For example, some storage resources in the memory 401 are divided into a data storage module 104 that is configured to store data required by the AI platform 100.

The processor 402 may be a central processing unit (central processing unit, CPU), an application-specific integrated circuit (application-specific integrated circuit, ASIC), a GPU, or any combination thereof. The processor 402 may include one or more chips. The processor 402 may include an AI accelerator, for example, a neural-network processing unit (neural-network processing unit, NPU).

The communications interface 403 uses a transceiver module, for example, a transceiver, to implement communication between the computing device 400 and another device or a communications network. For example, data may be obtained through the communications interface 403.

The bus 404 may include a channel for transmitting information between the components (for example, the memory 401, the processor 402, and the communications interface 403) of the computing device 400.

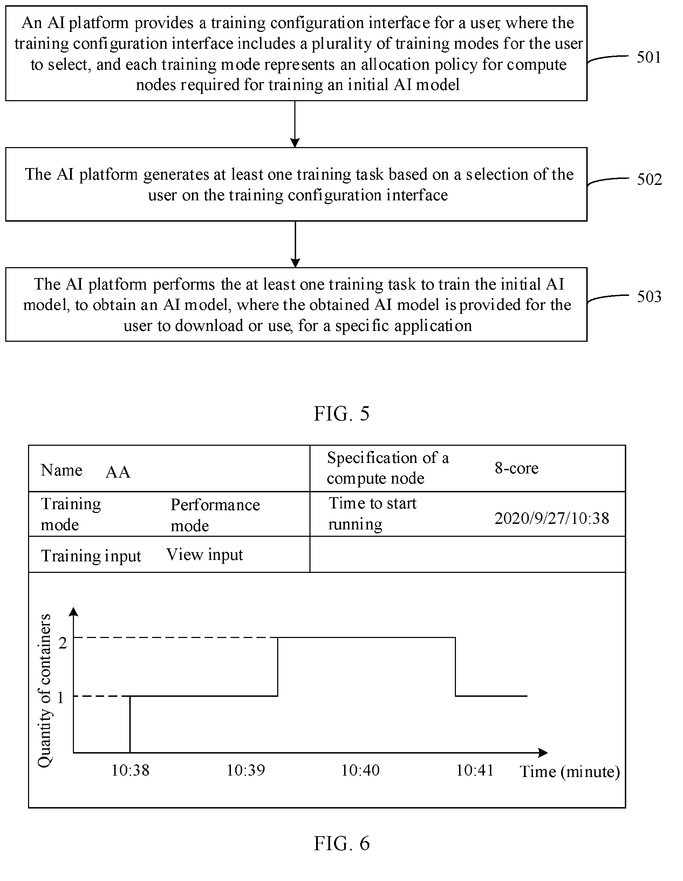

The following describes, with reference to FIG. 5, a specific procedure of a method for training an AI model in an embodiment. An example in which the method is performed by an AI platform is used for description.

Step 501: The AI platform provides a training configuration interface for a user, where the training configuration interface includes a plurality of training modes for the user to select, and each training mode represents an allocation policy for compute nodes required for training an initial AI model.

In this embodiment, if the user wants to train the AI model by using the AI platform, the user may open the training configuration interface in the AI platform. The training configuration interface may include the plurality of training modes for the user to select, and each training mode represents the allocation policy for the compute nodes required for training the initial AI model. Specifically, the training configuration interface not only displays the plurality of training modes, but also displays selection options corresponding to the training modes and introductions to the training modes. The user may select, through the selection options of the training modes and the introductions to the training mode, a training mode for training the AI model.

Step 502: The AI platform generates at least one training task based on a selection of the user on the training configuration interface.

In this embodiment, the AI platform may obtain the selection of the user on the training configuration interface, and generate the at least one training task (task) based on the selection of the user on the training configuration interface and the initial AI model. The at least one training task is used to train the initial AI model. Training the initial AI model may be referred to as performing a training job (job), that is, one training job includes at least one training task.

Step 503: The AI platform performs the at least one training task to train the initial AI model, to obtain an AI model, where the obtained AI model is provided for the user to download or use, for a specific application.

In this embodiment, the AI platform is associated with a computing resource pool, and the computing resource pool includes a compute node used for model training. The compute node performs the at least one training task to train the initial AI model, to obtain the AI model. The compute node feeds back the AI model to the AI platform. The AI platform may provide an interface for the user to download the AI model. On this interface, the user may download the AI model and use the AI model to perform a corresponding task. Alternatively, the user may upload an inference dataset to the AI platform and an inference process of the inference dataset is performed by the AI model.

In this way, in this embodiment of this application, the user may select a proper training mode to generate the at least one training task, so that distributed training can be flexibly performed, and a training requirement of the user and resource utilization can be balanced.

The following provides supplementary description of the procedure in FIG. 5.

In a possible implementation, the plurality of training modes may include a performance mode and a sharing mode. The performance mode indicates that a quantity of training tasks is automatically adjusted based on a specific policy in a process of training the initial AI model. The sharing mode indicates that different training tasks share a resource of a same compute node. The resource may include a GPU resource and/or a video memory. Different training tasks herein may belong to a same training job, or may belong to different training jobs. For example, the AI platform performs a training job A of a user A and a training job B of a user B. The training job A includes training tasks a and b, and the training job B includes training tasks c and d. The user A selects the sharing mode as the training mode on the training configuration interface. In this case, the AI platform may determine, based on resource usage of a container of the training task a of the training job A, a remaining resource of a compute node corresponding to a container that runs the training task a. The AI platform determines that the remaining resource is greater than resource usage of a container that runs the training task c, and the AI platform may schedule a container of the training task c to the compute node corresponding to the container that runs the training task a.

In a possible implementation, the at least one training task respectively runs in different containers, and each container includes a complete run-time environment including one training task, all dependencies required for performing the training task, and the like. Run-time herein refers to a dependency of a program during running. Specifically, in step 503, the AI platform may deliver, to the compute nodes in the computing resource pool, the containers that separately run the at least one training task, and start the delivered containers. The container performs the at least one training task to train the initial AI model, to obtain the AI model.

In the process of training the initial AI model, the AI platform may further provide status information of the training process for the user, where the status information may include a quantity of containers for performing the training task and resource usage of each container. As shown in FIG. 6, in the process of training the initial AI model, quantities of containers for performing the training task at various time points are displayed, which may be represented by a curve of time and the quantities of containers. In addition, resource usage of the containers is displayed. In this way, the quantity of containers for performing the training task is presented to the user in real time, and training performance is intuitively presented.

Optionally, the status information may further include a quantity of compute nodes for performing the training task or resource usage of the compute node for performing the training task.

Optionally, an interface for displaying the status information may further include information such as a name (for example, AA) of the initial AI model, a specification (for example, 8-core) of a compute node used in the training mode (for example, the performance mode), training input, and a time to start running (for example, 2020/9/27/10:38).

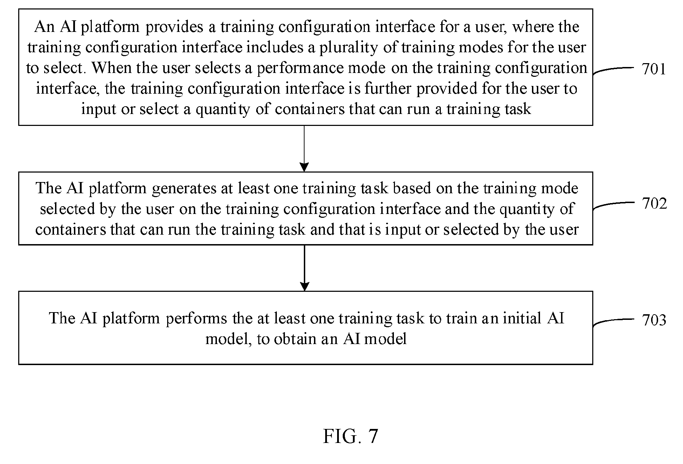

Refer to FIG. 7. FIG. 7 is a schematic flowchart of training an AI model when a user selects only a performance mode.

Step 701: An AI platform provides a training configuration interface for the user, where the training configuration interface includes a plurality of training modes for the user to select. When the user selects the performance mode on the training configuration interface, the training configuration interface is further provided for the user to input or select a quantity of containers that can run a training task.

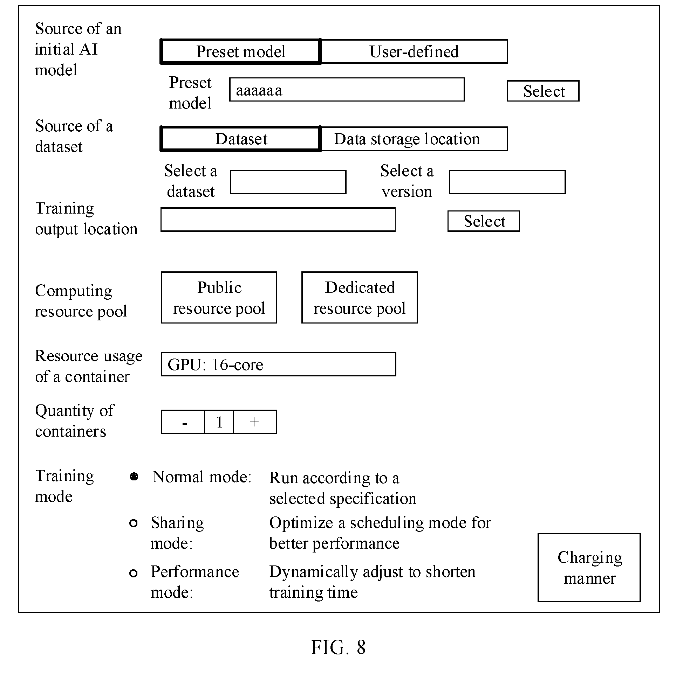

In this embodiment, the AI platform may provide the training configuration interface for the user, where the training configuration interface includes the plurality of training modes for the user to select. For example, as shown in FIG. 8, a selection interface of the training mode includes a performance mode, a sharing mode, a normal mode, and the like, and the user selects the performance mode.

When the user selects the performance mode as the training mode, the training configuration interface further provides, for the user to input or select, the quantity of containers that can run the training task. The quantity of containers that can run the training task is used to restrict a quantity of containers that can be used by each training job during scaling.

The user can input or select, on the training configuration interface, the quantity of containers that can run the training task. Specifically, a quantity of containers that can be selected by the user is displayed on the training configuration interface, and the user may select, from the quantity of containers, a quantity of containers that can run a training task. For example, the quantity of containers that can be selected by the user is 1, 2, 4, or 8, and the user inputs or selects 1, 2, or 4 as the quantity of containers that can run the training task. Alternatively, a range of a quantity of containers is displayed on the training configuration interface, and the user may select, from the range of the quantity of containers, a quantity of containers that can run a training task. For example, the range of the quantity of containers is [1,8], and the user inputs or selects 1, 2, or 4 as the quantity of containers that can run the training task.

It should be noted herein that a maximum quantity of containers that can run a training task is a maximum quantity of containers used to run the training task, and a minimum quantity of containers that can run a training task is a minimum quantity of containers used to run the training task. A purpose of limiting the quantity of containers is to limit a range of elastic scaling when at least one training task is performed in the performance mode.

Optionally, to facilitate scaling processing, during scaling, a value of a quantity of containers that run a training task may be 2n, where n is greater than or equal to 0 and is less than or equal to a target value. For example, the target value may be 4.

Optionally, as shown in FIG. 8, a dataset source is further displayed on the training configuration interface, and the user may select a training dataset and a version.

Optionally, as shown in FIG. 8, the training configuration interface further displays resource usage of a container.

Optionally, as shown in FIG. 8, the training configuration interface further displays a charging manner, to prompt the user.

Optionally, as shown in FIG. 8, the training configuration interface further displays an initial AI model source, used to display a selected initial AI model.

Optionally, as shown in FIG. 8, on the training configuration interface, options of a public resource pool and a dedicated resource pool are further displayed corresponding to a computing resource pool. When the user selects the public resource pool, a compute node in the public resource pool may be used for a plurality of training jobs. When the user selects the dedicated resource pool, a compute node in the dedicated resource pool is used only for a training job of the user. Each compute node in the dedicated resource pool performs a plurality of training tasks, implementing resource sharing by the plurality of training tasks and improving resource utilization.

When the user selects the public resource pool, charging may be performed in the foregoing manner. When the user selects the dedicated resource pool, charging is performed based on a quantity of used compute nodes and a use duration.

Step 702: The AI platform generates at least one training task based on the training mode selected by the user on the training configuration interface and the quantity of containers that can run the training task and that is input or selected by the user.

In this embodiment, the AI platform learns that the training mode selected by the user on the training configuration interface is the performance mode. The AI platform may obtain resource usage of each container in the performance mode. When the training mode selected by the user includes only the performance mode, resource usage of a container that runs a training task is a preset value, for example, the resource usage of the container is usage of all GPU resources and all video memories on a single compute node, or the resource usage of the container is usage of two GPU resources and two video memories on a single compute node. The AI platform may generate the at least one training task based on an idle compute node in a current computing resource pool, a quantity of containers that can run a training task and that is input or selected by the user, resource usage of a container, and an initial AI model. For example, the resource usage of the container is the usage of all GPU resources and all video memories on the single compute node. The current resource pool has 16 idle compute nodes, and a maximum quantity of containers that can run a training task is 8. The AI platform may generate eight training tasks. Each training task runs in one container, and each container occupies one compute node.

It should be noted herein that when the AI platform generates the training task for the first time, the AI platform obtains the maximum quantity of containers that can run the training task and resource usage of each container. The AI platform generates the maximum quantity of training tasks. If the AI platform determines, based on the resource usage of each container, that current idle resources in the computing resource pool are available for the maximum quantity of containers to run, the maximum quantity of containers are created. Each training task runs in a container, and different training tasks run on different containers. If the AI platform determines, based on the resource usage of each container, that current idle resources in the computing resource pool are not available for the maximum quantity of containers to run, a quantity of containers that can be used for running is determined, and the quantity of training tasks are created. Because the quantity is less than a maximum value, a plurality of training tasks run on one container.

Step 703: The AI platform performs the at least one training task to train the initial AI model, to obtain an AI model.

In this embodiment, the AI platform may deliver the container to the compute node in the computing resource pool, and the compute node runs the container, so that the AI platform performs the at least one training task to train the initial AI model, to obtain the AI model. For example, in step 702, the AI platform determines eight training tasks and determines that eight containers are used for running different training tasks, where each container runs on eight different compute nodes. The eight compute nodes are used to train the initial AI model.

When the performance mode is selected, the AI platform may dynamically adjust a quantity of containers in a process of training the AI model. The processing may be as follows:
obtaining, in a process of performing the at least one training task to train the initial AI model, an amount of idle computing resources in the computing resource pool when it is detected that an elastic scaling condition is met; adjusting, based on the amount of idle computing resources in the computing resource pool, a quantity of at least one training task and a quantity of containers that run the adjusted quantity of training tasks; and running the adjusted quantity of training tasks in the adjusted quantity of containers to train the initial AI model.

In this embodiment, in a process in which the AI platform performs the at least one training task to train the initial AI model, the AI platform may periodically determine whether a ratio of the amount of idle computing resources in the computing resource pool to all computing resources in the computing resource pool is higher than a target value. When the ratio is higher than the target value, running information of various training jobs in the computing resource pool may be further obtained, where the running information includes run-time and other information. A running phase may include a training dataset loading phase and a training phase. The AI platform may determine ratios of remaining run-time to elapsed run-time of the training jobs in the computing resource pool, and determine acceleration ratios of the training jobs. For the training job, the acceleration ratio may be represented by a ratio of a maximum quantity of containers for the training job to a quantity of currently used containers. A training job of which an acceleration ratio is 1 indicates that a quantity of containers is already the maximum, and no processing for adjusting the quantity of containers is performed.

The AI platform may determine ratios of the elapsed run-time to the remaining run-time and weighted values of the acceleration ratios of the training jobs. The AI platform performs sorting in descending order of the weighted values. Based on the amount of idle computing resources in the computing resource pool and a quantity of containers that can run each training job, the AI platform determines, in the training jobs that are sorted in order, a training job that can be scaled-up by using the idle amounts, and uses the training job as an object for adjusting a quantity of containers. As described above, the training job includes the training task. When the AI platform uses the at least one training task mentioned in step 701 as the object for adjusting the quantity of containers, that is, determines that the at least one training task meets a scaling condition, the AI platform may use a maximum quantity of containers for the at least one training task as an adjusted quantity of containers. The AI platform may adjust a quantity of training tasks to match the adjusted quantity of containers. Then, the AI platform delivers a newly-added container to a compute node, and a training task adjusted from the existing container runs in the newly-added container.

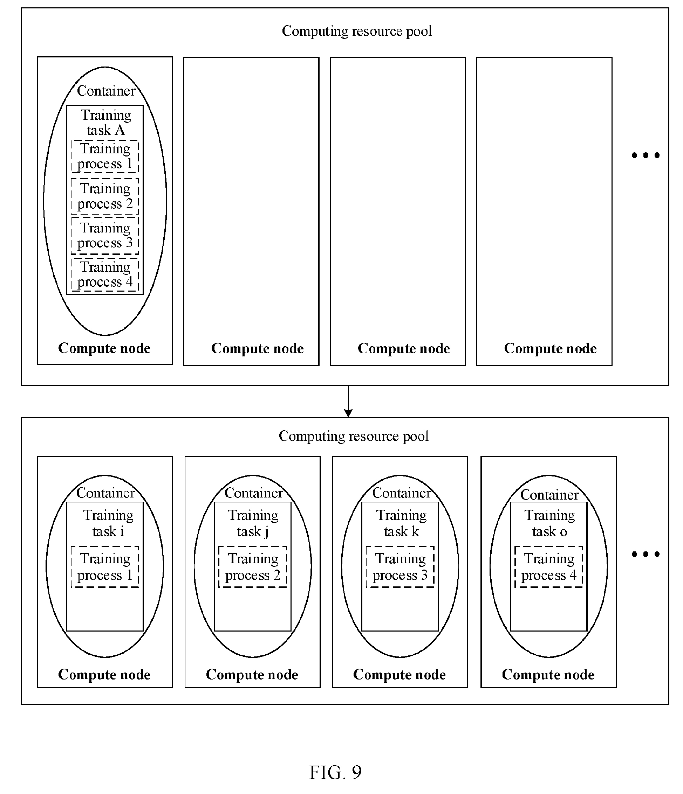

For example, a quantity of containers that can run the at least one training task is 1, 2, or 4. As shown in FIG. 9, the at least one training task is one training task A, the training task A includes four training processes (a training process 1, a training process 2, a training process 3, and a training process 4), and one container is used. The training process 1, the training process 2, the training process 3, and the training process 4 run in one container, and the container exactly occupies a resource of one compute node, and currently occupies one compute node. If there is only one training task A in a current computing resource pool, the one training task A may be split into four training tasks (a training task i, a training task j, a training task k, and a training task o). In this case, each training task includes a training process 1, a training process 2, a training process 3, and a training process 4. The four training tasks separately run on four containers, and each container is located on one compute node, which is equivalent to that four containers are used after adjustment, and the four containers occupy four compute nodes.

The AI platform may determine whether there is a new training job. When it is determined that there is a new training job, the AI platform determines whether a computing resource of a compute node in the computing resource pool can perform the training job. When the training job can be performed, the AI platform directly delivers, to the compute node, a container that runs a training task of the training job runs. When the training job cannot be performed, the AI platform obtains running information of various training jobs in the computing resource pool, where the running information includes run-time and other information. A running phase may include a training dataset loading phase and a training phase. The AI platform may determine ratios of elapsed run-time to remaining run-time of the training jobs in the computing resource pool, and determine acceleration ratios of the training jobs. For the training job, the acceleration ratio may be represented by a ratio of a quantity of containers currently used by the training job to a minimum quantity of containers. A training job of which an acceleration ratio is 1 indicates that a quantity of containers is already the minimum, and no processing for adjusting the quantity of containers is performed. The AI platform may determine ratios of the remaining run-time to the elapsed run-time and weighted values of the acceleration ratios of the training jobs. The AI platform performs sorting in ascending order of the weighted values. Based on the amount of idle computing resources in the computing resource pool and a quantity of containers that can run each training job, the AI platform determines, in the training jobs that are sorted in order, a training job that can be scaled-down by using the idle amounts, and uses the training job as an object for adjusting a quantity of containers.

When the AI platform uses the at least one training task mentioned in step 701 as the object for adjusting the quantity of containers, that is, determines that the at least one training task meets a scaling condition, in order to ensure that the training task on the AI platform can be performed quickly, the AI platform may lower a quantity of containers for the at least one training task by one level as an adjusted quantity of containers. The AI platform may adjust a quantity of training tasks to match the adjusted quantity of containers. Then, the AI platform deletes the container, and adjusts the training task in the container to run in another container for the at least one training task.

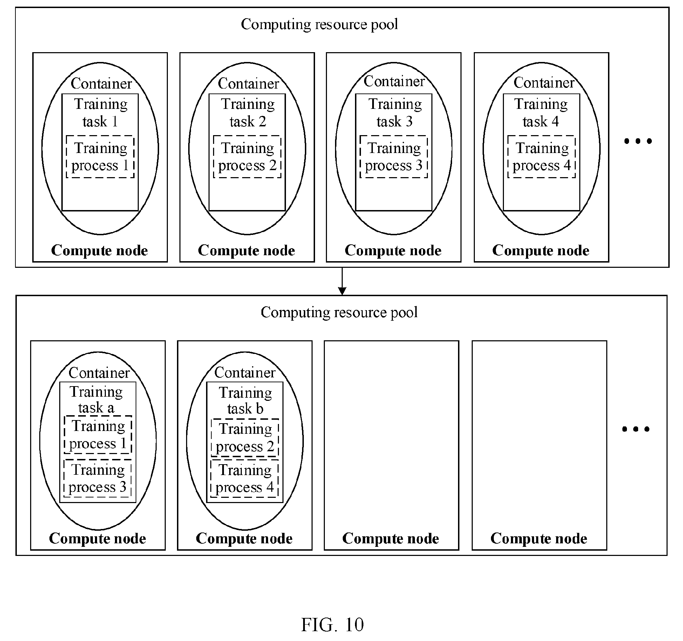

For example, a quantity of containers that can run the at least one training task is 1, 2, or 4. As shown in FIG. 10, the at least one training task is four training tasks (where a training task 1 includes a training process 1, a training task 2 includes a training process 2, a training task 3 includes a training process 3, and a training task 4 includes a training process 4). The four training tasks use four containers, each training task runs in one container, and each container exactly occupies a resource of one compute node. Currently, four nodes are occupied, and scaling-down processing is performed on the four training tasks. Every two training tasks (where the training process 1 and the training process 3 belong to one training task a, and the training process 2 and the training process 4 belong to one training task b) may run on one container, and each container is located on one compute node, which is equivalent to that two containers are used after adjustment, and the two containers occupy two compute nodes.

It should be noted herein that, regardless of scaling-up or scaling-down, a final objective to be achieved by the performance mode is to minimize expected overall run-time of the at least one training task.

In this way, when there are a large quantity of idle resources in the computing resource pool, at least one training task that is still running is scaled-up, to accelerate running of the at least one training task, so that the at least one training task is trained in a shortest time as possible, and a computing resource in a next busy time period is not occupied as much as possible. Therefore, training can be completed as quickly as possible.

In a possible implementation, to ensure that training accuracy is not reduced after scaling (including scaling-up and scaling-down), the processing may be as follows:
adding partial training tasks of the at least one training task to a target container that has run a training task of the at least one training task, running a plurality of training tasks in serial in the target container, and using, in a training process, an average value of model parameters obtained by running the plurality of training tasks in serial as an update value of a model parameter.

In this embodiment, when scaling-down is performed, a quantity of containers is reduced. Partial training tasks of the at least one training task run on the scaled-down container, and the partial training tasks are added to the target container that has run the training task of the at least one training task. Because the training task runs in the target container and the partial training tasks are added to the target container, the target container runs a plurality of training tasks. The plurality of training tasks run in serial in the target container. The AI platform uses the average value of the model parameters obtained by running the plurality of training tasks in serial as the update value of the model parameter. In this way, because the plurality of training tasks run in serial in the target container, it is equivalent to that the plurality of training tasks are performed in a distributed manner, which is the same as an original performance manner before scaling-down, and does not reduce training accuracy of the AI model.

The foregoing processing process may be referred to as batch processing approximation, and is used to simulate a task running in the distributed manner in N containers. This is equivalent to that during scaling-down, distributed training of an integer multiple of containers is simulated by using a simulation method, so as to ensure that the accuracy is not reduced. For example, in an example in FIG. 10, the training process 1 and the training process 3 belong to the training task a after the adjustment, and the training process 2 and the training process 4 belong to the training task b after the adjustment. The training task a runs in a container a and the training task b runs in a container b. The container a runs the training process 1 and the training process 3 in serial, and the container b runs the training process 2 and the training process 4 in serial.

For another example, in 16 containers, each container trains an AI model by using 64 pieces of data, and model parameters obtained by training each of the 16 containers are averaged, to obtain the AI model. In one container scaled-down from the 16 containers, 16 groups of data (each group contains 64 pieces of data) are used in serial to train the AI model. The obtained model parameters are averaged to obtain a final AI model. Therefore, training accuracy of the AI model is not reduced.

In this way, the training tasks before the adjustment run in serial, so as to ensure that the training accuracy is not reduced after the scaling-down.

In a possible implementation, to ensure that the training accuracy is not reduced after scaling, the AI platform may adaptively adjust the parameter. The AI platform may adaptively adjust, by using a manner such as historical training experience or a parameter group of an offline test, a corresponding hyperparameter during scaling, so that the training accuracy remains unchanged.

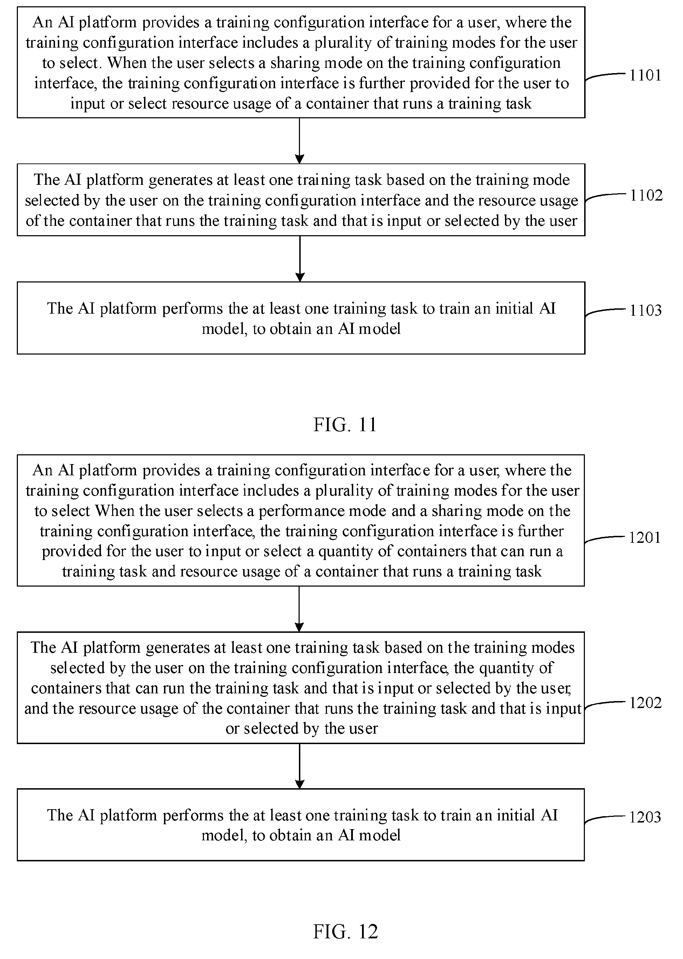

Refer to FIG. 11. FIG. 11 is a schematic flowchart of training an AI model when a user selects only a sharing mode.

Step 1101: An AI platform provides a training configuration interface for the user, where the training configuration interface includes a plurality of training modes for the user to select. When the user selects the sharing mode on the training configuration interface, the training configuration interface is further provided for the user to input or select resource usage of a container that runs a training task.

In this embodiment, the AI platform may provide the training configuration interface for the user, where the training configuration interface includes the plurality of training modes for the user to select. The training configuration interface displays resource usage that can be selected by the user. The user can select or input, in the resource usage, resource usage of a corresponding container that can run a training task. Alternatively, the training configuration interface displays a range of resource usage. The user can select or input, within the range of the resource usage, resource usage of a corresponding container that can run a training task. For example, if the range of the resource usage is 0.1 GPU to 1 GPU, the user can select 0.5 GPU.

Step 1102: The AI platform generates at least one training task based on the training mode selected by the user on the training configuration interface and the resource usage of the container that runs the training task and that is input or selected by the user.

In this embodiment, the AI platform may learn that the training mode selected by the user on the training configuration interface is the sharing mode. The AI platform may obtain resource usage of each container in the sharing mode. When the training mode selected by the user includes only the sharing mode, the resource usage of the container that runs the training task is a preset value. The AI platform may generate the at least one training task based on an idle compute node in a current computing resource pool, a preset quantity of containers, resource usage of a container, and an initial AI model. The preset quantity of containers herein may be a quantity of containers that can be used and that is specified by the AI platform for the at least one training task, or may be a quantity of containers that for the at least one training task and that is specified by the user.

Optionally, the resource usage of the container that runs the training task includes GPU resource usage less than usage of a single GPU and/or video memory usage less than usage of a single video memory. In this way, computing resources on the compute node can be divided more precisely, so that resource utilization can be improved.

Step 1103: The AI platform performs the at least one training task to train the initial AI model, to obtain an AI model.

Optionally, to reduce resource fragmentation, processing in step 1103 may be as follows:
determining, based on resource usage of each container that runs the at least one training task in the sharing mode and remaining resource of various compute nodes in a computing resource pool, a compute node for running a container for each training task; and starting the container for the at least one training task on the determined compute node, to train the initial AI model.

In this embodiment, the AI platform may statistically calculate the remaining resources of the compute nodes in the computing resource pool, and obtain the resource usage of each container that runs the at least one training task. If a remaining resource of a specific compute node in which partial resources have been occupied is greater than the resource usage of each container, the AI platform may deliver the container to the compute node. If all remaining resources of the compute node in which partial resources have been occupied are less than the resource usage of each container, the AI platform may deliver the container that runs the at least one training task to a compute node in which resources are not occupied. In this way, the AI platform delivers the container to the compute node. Then, the AI platform starts the container on the compute node to train the initial AI model.

Optionally, to reduce resource fragmentation, another processing manner in step 1103 may be as follows:
determining, based on resource usage of a container that runs the at least one training task in a second mode, a remaining resource of a compute node corresponding to each container; and running one or more other training tasks by using the remaining resource of the compute node corresponding to each container.

In this embodiment, the AI platform may determine, by using the resource usage of the container that runs the at least one training task in the second mode, a remaining resource of a compute node corresponding to the container that runs the at least one training task. When the AI platform performs another training job, if a remaining resource of a specific compute node used for the at least one training task is sufficient to perform one or more other training tasks, the remaining resource of the compute node may run the one or more other training tasks, to implement resource sharing on a same compute node.

In this way, in the sharing mode, when a resource requirement on a container is ensured, the compute node in which partial resources have been occupied is used as much as possible, so that resource fragmentation can be reduced, and overall resource utilization can be improved.

It should be noted that, in the procedure in FIG. 11, because the sharing mode indicates that a plurality of containers share a resource of a compute node, a function of limiting a video memory needs to be added to the initial AI model, so as to avoid, when the plurality of containers share the compute node, a memory leakage error of another container caused by a single task overusing the video memory.

Refer to FIG. 12. FIG. 12 is a schematic flowchart of training an AI model when a user selects a performance mode and a sharing mode.

Step 1201: An AI platform provides a training configuration interface for the user, where the training configuration interface includes a plurality of training modes for the user to select. When the user selects the performance mode and the sharing mode on the training configuration interface, the training configuration interface is further provided for the user to input or select a quantity of containers that can run a training task and resource usage of a container that runs a training task.

A processing process of step 1201 is a processing process obtained by combination of step 701 and step 1101. For details, refer to the descriptions of step 701 and step 1101. Details are not described herein again.

Step 1202: The AI platform generates at least one training task based on the training modes selected by the user on the training configuration interface, the quantity of containers that can run the training task and that is input or selected by the user, and the resource usage of the container that runs the training task and that is input or selected by the user.

In this embodiment, the AI platform may learn that the training mode selected by the user on the training configuration interface is the sharing mode. The AI platform may obtain resource usage of each container in the sharing mode. When the training mode selected by the user includes only the sharing mode, the resource usage of the container that runs the training task is a preset value. The AI platform may generate the at least one training task based on an idle compute node in a current computing resource pool, a quantity of containers that can run a training task and that is input or selected by the user, resource usage of a container, and an initial AI model. Herein, a quantity of containers determined by the AI platform belongs to the quantity of containers that can run the training task and that is input or selected by the user.

Optionally, the resource usage of the container that runs the training task includes GPU resource usage less than usage of a single GPU and/or video memory usage less than usage of a single video memory. In this way, computing resources on the compute node can be divided more precisely, so that resource utilization can be improved.

Step 1203: The AI platform performs the at least one training task to train the initial AI model, to obtain an AI model.

In step 1203, the dynamic scaling processing in the procedure in FIG. 7 and the shared resource in the procedure in FIG. 11 may be combined. For specific descriptions, refer to the descriptions in FIG. 7 and FIG. 11. Details are not described herein again.

In this way, in the sharing mode, when a resource requirement on a container is ensured, a compute node in which partial resources have been occupied is used as much as possible, so that resource fragmentation can be reduced, and overall resource utilization can be improved, to reduce costs of training an AI model by a single user. Moreover, in the performance mode, by dynamically adjusting a quantity of containers, training may be accelerated as much as possible, to improve efficiency of training the AI model.

In addition, for the procedures in FIG. 7, FIG. 11, and FIG. 12, because the training dataset is stored in the OBS, to reduce a time for each container to download the training dataset from the OBS, when a single container first loads the training data of the training job, an entire training dataset is downloaded from the OBS to storage space loaded by the compute node. The storage space may be solid state storage (solid state storage, SSS). In this way, each compute node that subsequently performs the training job may directly read data from the storage space. For example, a container newly added by scaling-up may directly read data from the storage space, thereby reducing a time required for re-downloading the training dataset from the OBS.

It should be noted that in this embodiment of this application, the container is generated by the AI platform by pulling an image and an initial AI model. In addition, the training task runs in the container. Because the container has good isolation, even if a plurality of containers are deployed on a same node, training tasks running on various containers do not interfere with each other.

According to this embodiment of this application, the AI platform provides the plurality of training modes for the user to select. The user may select a proper training mode, so that distributed training can be flexibly performed, thereby balancing a training requirement of the user and resource utilization.

FIG. 1 is a structural diagram of an apparatus for training an AI model according to an embodiment of this application. The apparatus is applied to an AI platform, the AI platform is associated with a computing resource pool, and the computing resource pool includes a compute node used for model training. The apparatus may be implemented as a part of the apparatus or the entire apparatus by using software, hardware, or a combination thereof. The apparatus provided in this embodiment of this application may implement the procedures in FIG. 7, FIG. 11, and FIG. 12 in embodiments of this application. The apparatus includes a training configuration module 102, a task management module 103, and a display module 105.

The training configuration module 102 is configured to provide a training configuration interface for a user, where the training configuration interface includes a plurality of training modes for the user to select, and each training mode represents an allocation policy for compute nodes required for training an initial AI model. The training configuration module 102 may be specifically configured to implement a training configuration function in step 701 and perform an implicit step included in step 701.

The task management module 103 is configured to:
generate at least one training task based on a selection of the user on the training configuration interface; and
perform the at least one training task to train the initial AI model, to obtain an AI model, where the obtained AI model is provided for the user to download or use. The task management module 103 may be specifically configured to implement task management functions in step 702 and step 703 and perform implicit steps included in step 702 and 703.

In a possible implementation, the plurality of training modes include a first mode and/or a second mode, the first mode indicates that a quantity of training tasks is automatically adjusted in a process of training the initial AI model, and the second mode indicates that different training tasks share a resource of a same compute node.

In a possible implementation, the at least one training task runs in a container, and the apparatus further includes:
a display module 105, configured to provide status information of the training process for the user in the process of training the initial AI model, where the status information includes at least one of the following information: a quantity of containers for performing the training task, resource usage of each container, a quantity of compute nodes for performing the training task, and resource usage of the compute node for performing the training task.

In a possible implementation, the plurality of training modes include the first mode and the second mode, and the task management module 103 is configured to:
generate the at least one training task based on the first mode and the second mode that are selected by the user on the training configuration interface.

In a possible implementation, when the user selects the first mode on the training configuration interface, the training configuration interface is further provided for the user to input or select a quantity of containers that can run the training task.

The task management module 103 is configured to:
generate the at least one training task based on the training mode selected by the user on the training configuration interface and the quantity of containers that can run the training task and that is input or selected by the user

In a possible implementation, when the user selects the second mode on the training configuration interface, the training configuration interface is further provided for the user to input or select resource usage of the container that runs the training task.

The task management module 103 is configured to:
generate the at least one training task based on the training mode selected by the user on the training configuration interface and the resource usage of the container that runs the training task and that is input or selected by the user.

In a possible implementation, the resource usage of the container that runs the training task includes GPU resource usage less than usage of a single GPU and/or video memory usage less than usage of a single video memory.

In a possible implementation, when the first mode is selected, the task management module 103 is configured to:
obtain, in a process of performing the at least one training task to train the initial AI model, an amount of idle computing resources in the computing resource pool when it is detected that an elastic scaling condition is met;
adjust, based on the amount of idle computing resources in the computing resource pool, a quantity of at least one training task and a quantity of containers used to run the training task; and
run the adjusted quantity of training tasks in the adjusted quantity of containers to train the initial AI model.

In a possible implementation, the task management module 103 is configured to:
add partial training tasks of the at least one training task to a target container that has run a training task of the at least one training task, run a plurality of training tasks in serial in the target container, and use, in a training process, an average value of model parameters obtained by running the plurality of training tasks in serial as an update value of a model parameter.

In a possible implementation, when the second mode is selected, the task management module 103 is further configured to:
determine, based on resource usage of a container that runs the at least one training task in the second mode, a remaining resource of a compute node corresponding to each container; and
run one or more other training tasks by using the remaining resource of the compute node corresponding to each container.

Division into the modules in this embodiment of this application is an example, and is merely logical function division. During actual implementation, another division manner may be used. In addition, the functional modules in embodiments of this application may be integrated in one processor, or each of the modules may exist alone physically, or two or more modules may be integrated into one module. The integrated module may be implemented in a form of hardware, or may be implemented in a form of a software functional module.

This application further provides a computing device 400 shown in FIG. 4. A processor 402 in the computing device 400 reads a program and a dataset that are stored in a memory 401, to perform the method performed by the foregoing AI platform.

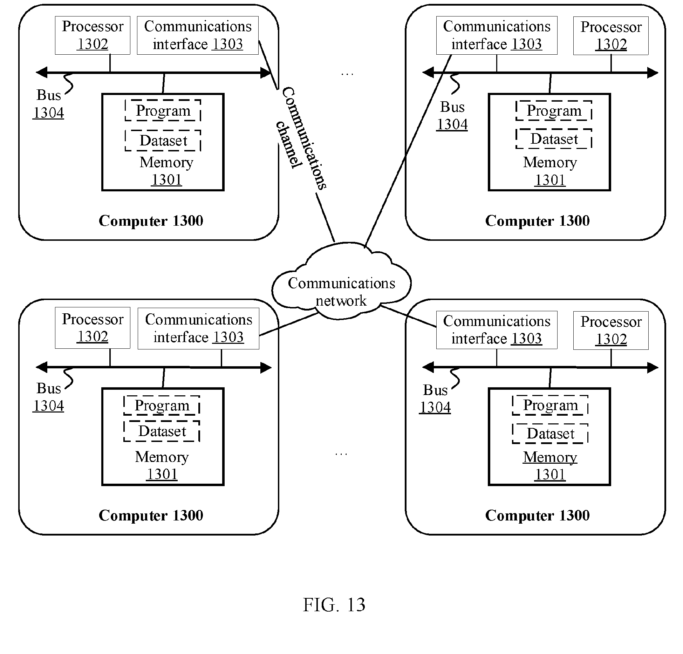

Because the modules in the AI platform 100 provided in this application may be deployed, in a distributed manner, on a plurality of computers in a same environment or different environments, this application further provides a computing device shown in FIG. 13. The computing device includes a plurality of computers 1300. Each computer 1300 includes a memory 1301, a processor 1302, a communications interface 1303, and a bus 1304. The memory 1301, the processor 1302, and the communications interface 1303 are communicatively connected to each other through the bus 1304.

The memory 1301 may be a read-only memory, a static storage device, a dynamic storage device, or a random access memory. The memory 1301 may store a program. When the program stored in the memory 1301 is executed by a processor 502, the processor 1302 and the communications interface 1303 are configured to perform a partial method of the AI platform for training an AI model. The memory may further store a training dataset. For example, some storage resources in the memory 1301 are divided into a dataset storage module that is configured to store a training dataset required by the AI platform.

The processor 1302 may be a general-purpose central processing unit, a microprocessor, an application-specific integrated circuit, a graphics processing unit, or one or more integrated circuits.

The communications interface 1303 uses a transceiver module, for example but not for limitation, a transceiver, to implement communication between the computer 1300 and another device or a communications network. For example, a training dataset may be obtained through the communications interface 1303.

A bus 504 may include a channel for transmitting information between the components (for example, the memory 1301, the processor 1302, and the communications interface 1303) of the computer 1300.

A communications channel is established between the computers 1300 by using a communications network. Any one or more of an algorithm management module 101, a training configuration module 102, a task management module 103, a data storage module 104, and a display module 105 run on each computer 1300. Any computer 1300 may be a computer (for example, a server) in a cloud data center, a computer in an edge data center, or a terminal computing device.

The descriptions of procedures corresponding to the foregoing accompanying drawings have respective focuses. For a part that is not described in detail in a procedure, refer to related descriptions of another procedure.

All or some of the foregoing embodiments may be implemented by software, hardware, or a combination thereof. When software is used to implement the embodiments, all or some of the embodiments may be implemented in a form of a computer program product. A computer program product that provides an AI platform includes one or more computer instructions for accessing the AI platform. When the computer program instructions are loaded and executed on a computer, all or some of the procedures or functions according to FIG. 7, FIG. 11, or FIG. 12 in embodiments of this application are generated.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium stores computer program instructions that provide an AI platform. The computer-readable storage medium may be any medium accessible by a computer, or a data storage device, such as a server or a data center, integrating one or more media. The medium may be a magnetic medium (for example, a floppy disk, a hard disk, or a magnetic tape), an optical medium (for example, an optical disc), or a semiconductor medium (for example, a solid-state drive).

## Claims

1. A method for training an artificial intelligence AI model, wherein the method is applied to an AI platform, the AI platform is associated with a computing resource pool, the computing resource pool comprises a compute node used for model training, and the method comprises:
providing a training configuration interface for a user, wherein the training configuration interface comprises a plurality of training modes for the user to select, and each training mode represents an allocation policy for compute nodes required for training an initial AI model;
generating at least one training task based on a selection of the user on the training configuration interface; and
performing the at least one training task to train the initial AI model, to obtain an AI model, wherein the obtained AI model is provided for the user to download or use.

2. The method according to claim 1, wherein the plurality of training modes comprise a first mode and/or a second mode, the first mode indicates that a quantity of training tasks is automatically adjusted in a process of training the initial AI model, and the second mode indicates that different training tasks share a resource of a same compute node.

3. The method according to claim 1 or 2, wherein the at least one training task runs in a container, and the method further comprises:
providing status information of the training process for the user in the process of training the initial AI model, wherein the status information comprises at least one of the following information: a quantity of containers for performing the training task, resource usage of each container, a quantity of compute nodes for performing the training task, and resource usage of the compute node for performing the training task.

4. The method according to claim 2 or 3, wherein the plurality of training modes comprise the first mode and the second mode, and the generating at least one training task based on a selection of the user on the training configuration interface comprises:
generating the at least one training task based on the first mode and the second mode that are selected by the user on the training configuration interface.

5. The method according to any one of claims 2 to 4, wherein when the user selects the first mode on the training configuration interface, the training configuration interface is further provided for the user to input or select a quantity of containers that can run the training task; and
the generating at least one training task based on a selection of the user on the training configuration interface comprises:
generating the at least one training task based on the training mode selected by the user on the training configuration interface and the quantity of containers that can run the training task and that is input or selected by the user

6. The method according to any one of claims 2 to 5, wherein when the user selects the second mode on the training configuration interface, the training configuration interface is further provided for the user to input or select resource usage of the container that runs the training task; and
the generating at least one training task based on a selection of the user on the training configuration interface comprises:
generating the at least one training task based on the training mode selected by the user on the training configuration interface and the resource usage of the container that runs the training task and that is input or selected by the user.

7. The method according to claim 5 or 6, wherein the resource usage of the container that runs the training task comprises GPU resource usage less than usage of a single graphics processing unit GPU and/or video memory usage less than usage of a single video memory.

8. The method according to any one of claims 2 to 7, wherein when the first mode is selected, the performing the at least one training task to train the initial AI model comprises:
obtaining, in a process of performing the at least one training task to train the initial AI model, an idle amount of idle computing resources in the computing resource pool when it is detected that an elastic scaling condition is met;
adjusting, based on the amount of idle computing resources in the computing resource pool, a quantity of at least one training task and a quantity of containers used to run the training task; and
running the adjusted quantity of training tasks in the adjusted quantity of containers to train the initial AI model.

9. The method according to claim 8, wherein the adjusting a quantity of at least one training task and a quantity of containers used to run the training task and running the adjusted quantity of training tasks in the adjusted quantity of containers to train the initial AI model comprises:
adding partial training tasks of the at least one training task to a target container that has run a training task of the at least one training task, running a plurality of training tasks in serial in the target container, and using, in a training process, an average value of model parameters obtained by running the plurality of training tasks in serial as an update value of a model parameter.

10. The method according to any one of claims 2 to 9, wherein when the second mode is selected, the method comprises:
determining, based on resource usage of a container that runs the at least one training task in the second mode, a remaining resource of a compute node corresponding to each container; and
running one or more other training tasks by using the remaining resource of the compute node corresponding to each container.

11. An apparatus for training an artificial intelligence AI model, wherein the apparatus is applied to an AI platform, the AI platform is associated with a computing resource pool, the computing resource pool comprises a compute node used for model training, and the apparatus comprises:
a training configuration module, configured to provide a training configuration interface for a user, wherein the training configuration interface comprises a plurality of training modes for the user to select, and each training mode represents an allocation policy for compute nodes required for training an initial AI model; and
a task management module, configured to:
generate at least one training task based on a selection of the user on the training configuration interface; and
perform the at least one training task to train the initial AI model, to obtain an AI model, wherein the obtained AI model is provided for the user to download or use.

12. The apparatus according to claim 11, wherein the plurality of training modes comprise a first mode and/or a second mode, the first mode indicates that a quantity of training tasks is automatically adjusted in a process of training the initial AI model, and the second mode indicates that different training tasks share a resource of a same compute node.

13. The apparatus according to claim 11 or 12, wherein the at least one training task runs in a container, and the apparatus further comprises:
a display module, configured to provide status information of the training process for the user in the process of training the initial AI model, wherein the status information comprises at least one of the following information: a quantity of containers for performing the training task, resource usage of each container, a quantity of compute nodes for performing the training task, and resource usage of the compute node for performing the training task.

14. The apparatus according to claim 12 or 13, wherein the plurality of training modes comprise the first mode and the second mode, and the task management module is configured to:
generate the at least one training task based on the first mode and the second mode that are selected by the user on the training configuration interface.

15. The apparatus according to any one of claims 12 to 14, wherein when the user selects the first mode on the training configuration interface, the training configuration interface is further provided for the user to input or select a quantity of containers that can run the training task; and
the task management module is configured to:
generate the at least one training task based on the training mode selected by the user on the training configuration interface and the quantity of containers that can run the training task and that is input or selected by the user.

16. The apparatus according to any one of claims 12 to 15, wherein when the user selects the second mode on the training configuration interface, the training configuration interface is further provided for the user to input or select resource usage of the container that runs the training task; and
the task management module is configured to:
generate the at least one training task based on the training mode selected by the user on the training configuration interface and the resource usage of the container that runs the training task and that is input or selected by the user

17. The apparatus according to claim 15 or 16, wherein the resource usage of the container that runs the training task comprises GPU resource usage less than usage of a single graphics processing unit GPU and/or video memory usage less than usage of a single video memory.

18. The apparatus according to any one of claims 12 to 17, wherein when the first mode is selected, the task management module is configured to:
obtain, in a process of performing the at least one training task to train the initial AI model, an amount of idle computing resources in the computing resource pool when it is detected that an elastic scaling condition is met;
adjust, based on the amount of idle computing resources in the computing resource pool, a quantity of at least one training task and a quantity of containers used to run the training task; and
run the adjusted quantity of training tasks in the adjusted quantity of containers to train the initial AI model.

19. The apparatus according to claim 18, wherein the task management module is configured to:
add partial training tasks of the at least one training task to a target container that has run a training task of the at least one training task, run a plurality of training tasks in serial in the target container, and use, in a training process, an average value of model parameters obtained by running the plurality of training tasks in serial as an update value of a model parameter.

20. The apparatus according to any one of claims 12 to 19, wherein when the second mode is selected, the task management module is further configured to:
determine, based on resource usage of a container that runs the at least one training task in the second mode, a remaining resource of a compute node corresponding to each container; and
run one or more other training tasks by using the remaining resource of the compute node corresponding to each container.

21. A computing device, wherein the computing device comprises a memory and a processor, and the memory is configured to store computer instructions; and
the processor executes the computer instructions stored in the memory, to perform the method according to any one of claims 1 to 10.

22. A computer-readable storage medium, wherein the computer-readable storage medium stores computer program code, and when the computer program code is executed by a computing device, the computing device performs the method according to any one of claims 1 to 10.
